(19) **Europäisches Patentamt / European Patent Office / Office européen des brevets**

(11) **EP 4 510 514 A1**

(12) **EUROPEAN PATENT APPLICATION**
published in accordance with Art. 153(4) EPC

(43) Date of publication:
**19.02.2025 Bulletin 2025/08**

(21) Application number: **23795195.9**

(22) Date of filing: **20.04.2023**

(51) International Patent Classification (IPC):
***H04L 27/26*** (2006.01)

(52) Cooperative Patent Classification (CPC):
**H04L 27/26; H04W 52/18**

(86) International application number:
**PCT/CN2023/089607**

(87) International publication number:
**WO 2023/207762 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022 CN 202210445583**

(71) Applicant: **Huawei Technologies Co., Ltd.
Shenzhen, Guangdong 518129 (CN)**

(72) Inventors:
• **GAO, Kuandong
Shenzhen, Guangdong 518129 (CN)**
• **HUANG, Huang
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) Embodiments of this application disclose a communication method and a device. The method includes: determining a first signal, where the first signal includes Q reference signals, every K reference signals in the Q reference signals form one group, a value of a first reference signal in the group is related to a value of a second reference signal, the second reference signal is a reference signal other than the first reference signal in the group, power of each group of reference signals at a start location of the first signal that has undergone DFT processing is 0, and both K and Q are even numbers greater than 1; and sending the first signal. Based on the method described in this application, in-band interference of a signal is reduced.

701: Determine a first signal, where the first signal includes Q reference signals, every K reference signals in the Q reference signals form a group, a value of a first reference signal in the group is related to a value of a second reference signal, the second reference signal is a reference signal in the group other than the first reference signal, power of each group of reference signals at a start location of the first signal that has undergone DFT processing is 0, and both K and Q are even numbers greater than 1

702: First signal

FIG. 7

**Description**

This application claims priority to Chinese Patent Application No. 202210445583.3, filed with the China National Intellectual Property Administration on April 26, 2022 and entitled "COMMUNICATION METHOD AND DEVICE", which is incorporated herein by reference in its entirety.

**TECHNICAL FIELD**

This application relates to the field of communication technologies, and in particular, to a communication method and a device.

**BACKGROUND**

A high frequency band (frequency bands higher than 6G, mainly including 28G, 39G, 60G, 73G, and the like) with rich frequency band resources has become a hot topic for research and development in the industry to meet increasing communication requirements. The high frequency band can provide a large bandwidth and a highly integrated antenna array for communication to achieve a high throughput. However, a phase noise (phase noise, PHN) problem in the high frequency band is very prominent. At present, a phase-tracking reference signal (Phase-Tracking Reference Signal, PTRS) is introduced in high frequency band communication of a 5th-generation mobile communication technology (5G), and is used for phase noise estimation and compensation.

Discrete Fourier transform spread orthogonal frequency division multiplexing (Discrete Fourier Transform spread OFDM, DFT-s-OFDM) is an LTE uplink signal generation mode. Because DFT-s-OFDM has extra DFT processing before a conventional OFDM processing process, DFT-s-OFDM is also referred to as a linear precoding OFDM technology. However, because a spectrum in a DFT-s-OFDM scheduled bandwidth is flat, a frequency band edge of DFT-s-OFDM is likely to have a large power value. Consequently, large in-band radiation (In-band radiation) is easily generated.

**SUMMARY**

This application provides a communication method and a device, to help reduce a power value at a frequency band edge of a signal.

According to a first aspect, this application provides a communication method. The method includes: determining a first signal, where the first signal includes Q reference signals, every K reference signals in the Q reference signals form one group, a value of a first reference signal in the group is related to a value of a second reference signal, the second reference signal is a reference signal other than the first reference signal in the group, power of each group of reference signals at a start location of the first signal that has undergone DFT processing is 0, and both K and Q are even numbers greater than 1; and sending the first signal.

Based on the method described in the first aspect, because the first signal includes the reference signal and a data signal, power or an amplitude of the reference signal at the start location of the first signal that has undergone DFT processing is 0. This helps reduce an amplitude value or a power value of the first signal at the start location, thereby reducing in-band interference of a signal.

In a possible implementation, that a value of a first reference signal in the group is related to a value of a second reference signal is specifically: The value of the first reference signal in the group is related to a start frequency of the first signal and the value of the second reference signal.

In a possible implementation, the start frequency of the first signal is 0, and a sum of the value of the first reference signal and the value of the second reference signal is 0.

In a possible implementation, the start frequency of the first signal is $\pi$, index values of reference signals in the group are all even numbers or odd numbers, and a sum of the value of the first reference signal and the value of the second reference signal is 0.

In a possible implementation, the start frequency of the first signal is $\pi$, and index values of reference signals in the group include both even numbers and odd numbers. The value of the first reference signal is a, a sum of values of second reference signals whose index values are even numbers is b, and a sum of values of second reference signals whose index values are odd numbers is c. If an index value of the first reference signal is an even number, a satisfies $(a + b) - c = 0$. If an index value of the first reference signal is an odd number, a satisfies $b - (c + a) = 0$.

In a possible implementation, the group of reference signals all belong to a same reference signal block.

In a possible implementation, K reference signals in the group of reference signals belong to a plurality of reference signal blocks.

In a possible implementation, K reference signals in the group of reference signals are consecutive or inconsecutive.

In a possible implementation, values of the Q reference signals are obtained after precoding.

According to a second aspect, this application provides a communication apparatus. The communication apparatus includes a communication unit and a processing unit. The processing unit is configured to determine a first signal, where the first signal includes Q reference signals, every K reference signals in the Q reference signals form one group, a value of a first reference signal in the group is related to a value of a second reference signal, the second reference signal is a reference signal other than the first reference signal in the group, and power of each group of reference signals at a start location of the first signal that has undergone DFT processing is 0, and both K and Q are even numbers greater than 1. The communication unit is configured to send the first signal.

In a possible implementation, that a value of a first reference signal in the group is related to a value of a second reference signal is specifically: The value of the first reference signal in the group is related to a start frequency of the first signal and the value of the second reference signal.

In a possible implementation, the start frequency of the first signal is 0, and a sum of the value of the first reference signal and the value of the second reference signal is 0.

In a possible implementation, the start frequency of the first signal is $\pi$, index values of reference signals in the group are all even numbers or odd numbers, and a sum of the value of the first reference signal and the value of the second reference signal is 0.

In a possible implementation, the start frequency of the first signal is $\pi$, and index values of reference signals in the group include both even numbers and odd numbers. The value of the first reference signal is a, a sum of values of second reference signals whose index values are even numbers is b, and a sum of values of second reference signals whose index values are odd numbers is c. If an index value of the first reference signal is an even number, a satisfies $(a + b) - c = 0$. If an index value of the first reference signal is an odd number, a satisfies $b - (c + a) = 0$.

In a possible implementation, the group of reference signals all belong to a same reference signal block.

In a possible implementation, K reference signals in the group of reference signals belong to a plurality of reference signal blocks.

In a possible implementation, K reference signals in the group of reference signals are consecutive or inconsecutive.

In a possible implementation, values of the Q reference signals are obtained after precoding.

According to a third aspect, this application provides a communication apparatus. The communication apparatus includes a processor. When the processor invokes a computer program in a memory, the method according to any one of the first aspect and the implementations of the first aspect is performed.

According to a fourth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the implementations in the first aspect by using a logic circuit or by executing code instructions.

According to a fifth aspect, this application provides a computer-readable storage medium. The storage medium stores a computer program or instructions, and when the computer program or the instructions are executed by a communication apparatus, the method according to any one of the implementations in the first aspect is implemented.

According to a sixth aspect, this application provides a computer program product including instructions. When a computer reads and executes the computer program product, the computer is enabled to perform the method according to any one of the implementations in the first aspect.

**BRIEF DESCRIPTION OF DRAWINGS**

To describe the technical solutions in embodiments of this application or in the conventional technologies more clearly, the following briefly describes the accompanying drawings used for describing embodiments or the conventional technologies.

FIG. 1 shows a network architecture according to an embodiment of this application;
FIG. 2 shows a signal sending and receiving process according to an embodiment of this application;
FIG. 3 is a diagram of a DFT-s-OFDM processing process according to an embodiment of this application;
FIG. 4 is a diagram of phase noise of an actual system according to an embodiment of this application;
FIG. 5a is a diagram of scatters obtained after phase noise compensation is performed on a received signal according to an embodiment of this application;
FIG. 5b is a diagram of scatters obtained after phase noise compensation is not performed on a received signal according to an embodiment of this application;

FIG. 6 is a power spectral density diagram of DFT-s-OFDM according to an embodiment of this application;
FIG. 7 is a schematic flowchart of a communication method according to an embodiment of this application;
FIG. 8a is a diagram of reference signal grouping according to an embodiment of this application;
FIG. 8b is a diagram of another reference signal grouping according to an embodiment of this application;
FIG. 8c is a diagram of another reference signal grouping according to an embodiment of this application;
FIG. 8d is a diagram of another reference signal grouping according to an embodiment of this application;
FIG. 9 is a power spectral density diagram of DFT-s-OFDM according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of a chip according to an embodiment of this application.

## DESCRIPTION OF EMBODIMENTS

The following describes the technical solutions in embodiments of this application in more detail.

Terms used in the following embodiments of this application are merely intended to describe specific embodiments, but are not intended to limit this application. As used in this specification and the appended claims of this application, singular expressions "one", "a", "the", "the foregoing", "this", and "the one" are also intended to include plural expressions, unless otherwise specified in the context clearly. It should be further understood that the term "and/or" used in this application refers to and includes any or all possible combinations of one or more listed items. The term "a plurality of" used in this application means two or more.

It should be further understood that, "first", "second", "third", "fourth", and various numbers in this specification are merely used for differentiation for ease of description, and are not intended to limit the scope of embodiments of this application.

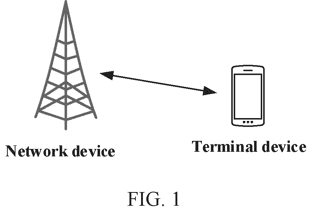

Embodiments of this application may be applied to a network architecture shown in FIG. 1. The network architecture shown in FIG. 1 is a network architecture of a wireless communication system. The network architecture usually includes a terminal device and a network device. A quantity and a form of devices constitute no limitation on embodiments of this application. For example, embodiments of this application may be applied to a scenario in which a multi-layer single carrier may be used, such as multi-station transmission (where a same UE simultaneously transmits signals to a plurality of transmission points), backhaul, wireless to the x (wireless to the x, WTTx), enhanced mobile broadband (enhanced mobile broadband, eMBB), and device to device (device to device, D2D). In embodiments of this application, the terminal device and the network device may communicate with each other by using a single carrier.

It should be noted that the wireless communication system mentioned in embodiments of this application includes but is not limited to an Internet of things (Internet of things, IoT) system, a long term evolution (long term evolution, LTE) system, a 5th-generation mobile communication (5th-generation, 5G) system, a 6th-generation mobile communication (6th-generation, 5G) system, and a future mobile communication system. In some embodiments, the technical solutions in embodiments of this application may be further applied to a wireless local area network (Wireless Local Area Network, WLAN), may be further applied to a vehicle-to-everything (Vehicle-to-X, V2X) network, may be further applied to a non-terrestrial network (non-terrestrial network, NTN), a satellite and high-altitude platform (satellite and High-Altitude Platform, HAP) network, an enhanced Internet of things (LTE enhanced MTO, eMTC), may be further applied to another network, or the like. In some other embodiments, the technical solutions in embodiments of this application may be further applied to a communication-radar integrated communication system, a terahertz communication system, a communication system with a high frequency, and the like. This is not specifically limited in this application.

The network device in embodiments of this application may be a base station (Base Station, BS). The base station may provide communication services for a plurality of terminal devices, or a plurality of base stations may provide communication services for a same terminal device. In embodiments of this application, the base station is an apparatus deployed in a radio access network to provide a wireless communication function for a terminal device. A base station device may be a base station, a relay station, or an access point. The base station may be an eNB or an eNodeB (Evolved NodeB) in long term evolution (Long Term Evolution, LTE). Alternatively, the base station device may be a radio controller in a cloud radio access network (Cloud Radio Access Network, CRAN) scenario. Alternatively, the base station device may be a base station device in a future 5G network or a network device in a future evolved PLMN network. Alternatively, the base station device may be a wearable device, a vehicle-mounted device, or the like. In embodiments of this application, an apparatus configured to implement a function of the network device may be the network device, or may be an apparatus that can support the network device in implementing the function, for example, a chip system. The apparatus may be installed in the network device.

The terminal device in embodiments of this application may also be referred to as a terminal, and may be a device with wireless receiving and sending functions. The terminal device in embodiments of this application may include various user equipment (user equipment, UE) that have a wireless communication function, an access terminal, a UE unit, a UE station, a mobile site, a mobile station, a remote terminal, a mobile device, a UE terminal, a terminal, a wireless communication device, a UE agent, a UE apparatus, or the like. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device or another processing device connected to a wireless modem, an unmanned aerial vehicle (or drone for short) (unmanned aerial vehicle/drone, UVA), a vehicle-mounted device, a wearable device, a terminal device in a future 5G network, a terminal device in a future evolved PLMN network, or the like. In embodiments of this application, an apparatus configured to implement a function of a terminal may be a terminal; or may be an apparatus that can support the terminal in implementing the function, for example, a chip system. The apparatus may be installed in the terminal. In embodiments of this application, the chip system may include a chip, or may include a chip and another discrete component.

Embodiments of this application may be applied to a device to device (device to device, D2D) system, a machine to machine (machine to machine, M2M) system, a vehicle to everything (vehicle to everything, V2X) system, or the like.

Embodiments of this application may be applied to a next generation microwave scenario, an NR-based microwave scenario, a backhaul (integrated access backhaul, IAB) scenario, or the like.

Embodiments of this application may be applied to an uplink transmission scenario, that is, a scenario in which the terminal device sends an uplink signal to the network device; and may also be applied to a downlink transmission scenario, that is, a scenario in which the network device sends a downlink signal to the terminal device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

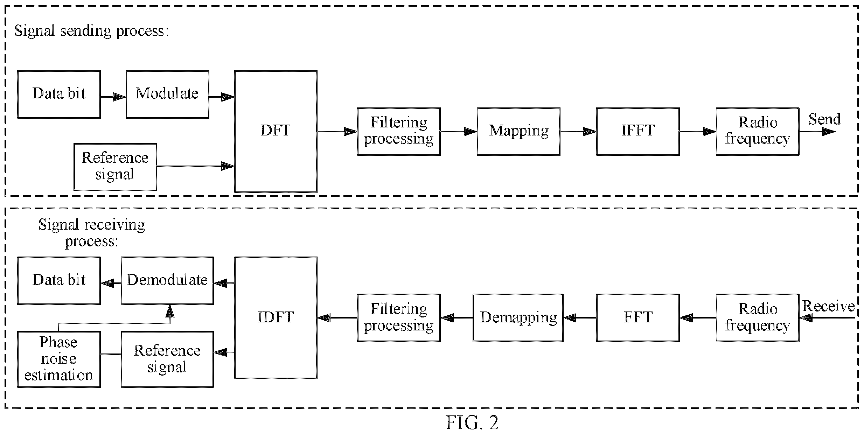

FIG. 2 is a signal sending and receiving process according to an embodiment of this application. In a possible implementation, a terminal device is a transmit end, and a network device is a receive end. In another possible implementation, a network device is a transmit end, and a terminal device is a receive end.

A signal sending process of the transmit end is as follows: The transmit end performs discrete Fourier transform (discrete Fourier transform, DFT) on a modulated data bit and a reference signal, performs the following processing in sequence: filtering (Filtering), mapping (mapping), and inverse fast Fourier transform (inverse fast Fourier transform, IFFT), on a signal that has undergone DFT processing, and then sends the signal by using radio frequency.

It should be noted that modulation indicates that a data bit signal is modulated to a corresponding modulation symbol. Mapping indicates that the signal is mapped to a plurality of carriers. DFT indicates that frequency domain Fourier transform is performed on the signal to transform a time domain signal into a frequency domain signal. Filtering indicates that the frequency domain signal is filtered. Mapping indicates that the signal that has undergone frequency domain filtering is mapped to to-be-sent subcarriers. IFFT indicates that inverse fast Fourier transform processing is performed on the frequency domain signal, the frequency domain signal is transformed into a time domain signal, and then a cyclic prefix is added. Sending indicates that a baseband signal is sent by using radio frequency.

A signal receiving process of the receive end is as follows: The receive end receives a signal by using radio frequency, performs the following processing: fast Fourier transform (FFT), demapping, filtering, and inverse discrete Fourier transform (inverse discrete Fourier transform, IDFT), on the signal in sequence, and then demodulates the signal to obtain a final data bit.

It should be noted that FFT indicates that a cyclic prefix of a received signal is removed, and then Fourier transform is performed on the signal, to transform a time domain signal to a frequency domain signal. The demapping operation indicates that the signal is removed from a subcarrier, and a channel processing operation is performed on the signal. Filtering processing indicates that a filter on a signal is removed, or another operation, for example, matched filtering, is performed. Optionally, there may be no filtering step. This is not limited in this embodiment of this application. IDFT indicates that the frequency domain signal is transformed to the time domain signal and then is demodulated. A to-be-demodulated signal is divided into two parts. A first part is a modulated signal for data signal transmission, and the other part is a modulated signal for reference signal transmission. A modulation signal corresponding to a data signal is used for transmitting data, and a modulation signal corresponding to a reference signal is used for assisting in receiving the first part of the data signal, and may be specifically used for phase noise estimation.

The following describes some concepts in embodiments of this application.

(1) Peak to average power ratio (peak to average power ratio, PAPR)

A radio signal is a sine wave with a changing amplitude in time domain. The amplitude is not constant. An amplitude peak of the signal in one period is different from those in other periods. Therefore, average power and peak power of all periods are different. Peak power is the highest transient power that occurs with a probability over a long period of time, and the probability is usually 0.01% (namely, 10^-4). A ratio of the peak power under this probability to total average power of a system is a PAPR.

A signal of a wireless communication system needs to be amplified in power before being sent far away. Due to a limitation of technology and device costs, a power amplifier usually performs linear amplification in only one range. If the range is exceeded, signal distortion is caused. The signal distortion causes a receive end of a received signal to be incapable of correctly parsing the signal. To ensure that the peak of the signal is still within the linear range in which the power amplifier can normally perform power amplification, the average power of a to-be-sent signal needs to be reduced. This manner leads to low efficiency of the power amplifier, or is equivalent to a smaller coverage area.

Because a signal of orthogonal frequency division multiplexing (orthogonal frequency division multiplexing, OFDM) on a carrier is represented as a sinc (sinc) function, there is tailing on left and right sides. Within a probability, tailing of a plurality of carriers may be superimposed at a distance to form a point with high peak power. In other words, use of an OFDM waveform easily causes a problem that the PAPR is excessively high.

(2) Single carrier

A single carrier has a lower PAPR than an OFDM waveform, and the present invention considers a scenario in which data is transmitted by using a single-carrier based waveform. The single carrier includes but is not limited to the following waveforms: a single carrier-quadrature amplitude modulation (single carrier-quadrature amplitude modulation, SC-QAM) waveform, a discrete Fourier transform-spread-OFDM (discrete Fourier transform-spread-orthogonal frequency division multiplexing, DFT-s-OFDM) waveform, a DFT-s-OFDM waveform with a real part and an imaginary part separated from each other, a single carrier-offset quadrature amplitude modulation (single carrier-Offset quadrature amplitude modulation, SC-OQAM) waveform, a discrete Fourier transform spread orthogonal frequency division multiplexing (discrete Fourier transform spread orthogonal frequency division multiplexing, DFT-s-OFDM with FTSS) waveform, a DFT-s-OFDM waveform that carries a pulse amplitude modulation (pulse amplitude modulation, PAM) constellation, a DFT-s-OFDM waveform that carries a PAM constellation and that is processed by a spectrum shaping filter, a DFT-S-OFDM waveform that is processed by a spectrum shaping filter and that carries a real part and an imaginary part separated from each other, a unique word discrete Fourier transform spread orthogonal frequency division multiplexing (unique word discrete Fourier transform spread OFDM, uw-DFT-s-OFDM) waveform, a uw-DFT-s-OFDM waveform with a real part and an imaginary part separated from each other, a uw-DFT-s-OFDM with frequency domain truncation and spectrum shaping (uw-DFT-s-OFDM with FTSS) waveform, a uw-DFT-s-OFDM waveform that carries a PAM constellation, a uw-DFT-s-OFDM waveform that is processed by a spectrum shaping filter and that carries a real part and an imaginary part separated from each other, a uw-DFT-s-OFDM waveform that carries a PAM constellation and that is processed by a spectrum shaping filter, a zero tail discrete Fourier transform spread orthogonal frequency division multiplexing (zero tail discrete Fourier transform spread OFDM, zt-DFT-s-OFDM) waveform, a zt-DFT-s-OFDM with frequency domain truncation and spectrum shaping (zt-DFT-s-OFDM with FTSS) waveform, a zt-DFT-s-OFDM waveform with a real part and an imaginary part separated from each other, a zt-DFT-s-OFDM waveform that carries a PAM constellation, a zt-DFT-s-OFDM waveform that is processed by a spectrum shaping filter and that carries a real part and an imaginary part separated from each other, a zt-DFT-s-OFDM waveform that carries a PAM constellation and that is processed by a spectrum shaping filter, and the like. It should be noted that the waveforms are named based on features of the waveforms. In actual application, the waveforms may also be named in another manner.

A DFT-s-OFDM technology is a single-carrier technology based on the OFDM waveform. Compared with the OFDM waveform, the DFT-s-OFDM waveform provides higher output power and higher power amplification efficiency under the same power amplification, thereby improving coverage and reducing power consumption. In some embodiments, a DFT-s-OFDM signal is at least one of the following signals: a signal of DFT-s-OFDM with FTSS, a DFT-s-OFDM signal that carries a real part and an imaginary part separated from each other, a DFT-s-OFDM signal that carries a pulse amplitude modulation (pulse amplitude modulation, PAM) constellation, a DFT-s-OFDM signal that is processed by a spectrum shaping filter and that carries a real part and an imaginary part separated from each other, a DFT-s-OFDM signal that carries a PAM constellation and that is processed by a spectrum shaping filter, or an SC-OQAM signal.

Currently, in a long term evolution (long term evolution, LTE) system and a 5th-generation (5th-generation, 5G) (or referred to as a new radio (new radio, NR)) communication system, the DFT-s-OFDM waveform may be used in uplink transmission. However, in high frequency communication, because a capability of a component is limited and a PAPR problem is serious, the DFT-s-OFDM waveform may also be used in downlink transmission. A frequency band of high frequency communication may be 24250 MHz to 52600 MHz in the NR system, or may be a frequency band higher than 52600 MHz supported by a subsequently evolved NR system, or may be a higher frequency band of a next generation communication system, for example, a terahertz (THz) frequency band.

In the DFT-s-OFDM technology, additional discrete Fourier transform (discrete Fourier transform, DFT) processing is performed before an OFDM processing process. Therefore, the DFT-s-OFDM technology may also be referred to as a linear precoding OFDM technology.

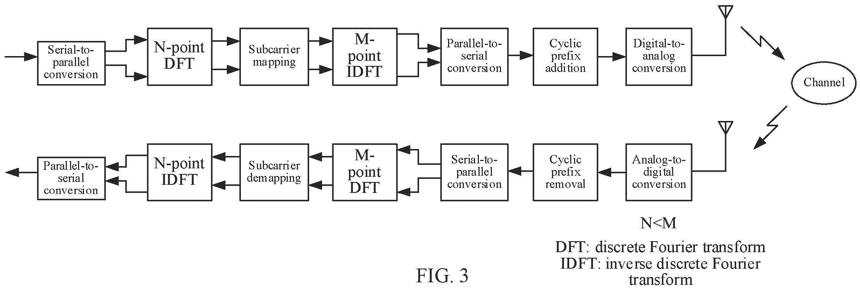

FIG. 3 is a diagram of a processing process of a DFT-s-OFDM technology according to an embodiment of this application. A transmit end performs the following processing: serial-to-parallel (serial-to-parallel) conversion, N-point DFT, subcarrier mapping, M-point IDFT, parallel-to-serial (parallel-to-serial) conversion, cyclic prefix (cyclic prefix, CP) addition, and digital-to-analog conversion (digital-to-analog conversion, DAC), on a time domain discrete sequence in sequence, and then sends a signal through an antenna port and a channel (channel). When receiving a signal through the channel and the antenna port, a receive end performs analog-to-digital conversion (analog-to-digital conversion, ADC), cyclic prefix removal, serial-to-parallel (serial-to-parallel) conversion, M-point DFT, subcarrier demapping, N-point IDFT, and parallel-to-serial (parallel-to-serial) conversion on the signal, to obtain a time domain discrete sequence.

The transmit end may obtain a frequency domain sequence of the time domain discrete sequence through N-point DFT. After the subcarrier mapping is performed on the frequency domain sequence, the frequency domain sequence is input for IDFT and M-point IDFT is performed, where N<M. Because a length of the IDFT is greater than a length of the DFT, a part that is in the IDFT and in which the length of the IDFT exceeds a length of the DFT is padded with zeroes before being input. After the IDFT, the cyclic prefix may be added to avoid symbol interference.

Compared with OFDM, the DFT-s-OFDM has a lower PAPR. This can improve power transmission efficiency of a mobile terminal, prolong battery life, and reduce terminal costs.

(3) Orthogonal frequency division multiplexing with frequency domain spectrum shaping (orthogonal frequency division multiplexing with frequency domain spectrum shaping, OFDM with FDSS)

A DFT-s-OFDM with FDSS waveform is a special DFT-s-OFDM waveform. Compared with the DFT-s-OFDM, a DFT-s-OFDM with FDSS technology adds a frequency domain spectrum shaping operation after DFT processing. The frequency domain spectrum shaping is specifically: Spectrum duplication is first performed on a signal, and then the duplicated signal is processed by using a filter, to achieve frequency domain spectrum shaping effect. Because frequency domain spectrum shaping is performed, it is equivalent to that a waveform in time domain changes from a DFT-S-OFDM sinc waveform to another waveform with a shorter time length/a lower sideband envelope, thereby further reducing a PAPR of the DFT-S-OFDM waveform. This is an alternative waveform technology in future mobile communication (6G+) and high frequency scenarios.

(4) Phase noise (phase noise, PN)

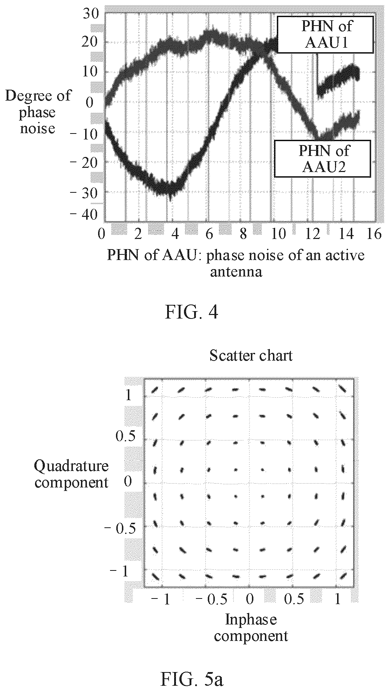

The phase noise (or referred to as PN for short) refers to a random change of a phase of an output signal of a communication device caused by various noise of the communication device (for example, various radio frequency components) that sends a signal. To meet increasing communication requirements, frequency band resources of high frequency bands (frequency bands higher than 6G, mainly including 28G, 39G, 60G, 73G, and the like) are increasingly used in a communication system to transmit a signal. The high frequency band can provide a large bandwidth and a highly integrated antenna array for communication to achieve a high throughput. However, a phase noise problem of a high frequency band is very prominent. As the frequency band increases, a higher phase noise power spectral density indicates greater impact on a received signal. When a frequency band for sending a signal is high, deterioration of the phase noise causes poor demodulation performance of the signal and deteriorates communication quality. FIG. 4 shows phase noise of an actual system according to an embodiment of this application. In FIG. 4, a vertical axis represents phase noise, two curves correspond to phase noise of two active antenna units (Active Antenna Unit, AAU), and the phase noise of the two AAUs usually ranges from -30 degrees to 20 degrees.

To estimate and compensate for phase noise of a signal, a phase-tracking reference signal (phase-tracking reference signal, PTRS) is introduced in this field.

For example, for impact of the phase noise, refer to Formula (1):

$$y(n) = x(n)e^{j\theta_n} \qquad\qquad \text{Formula (1)}$$

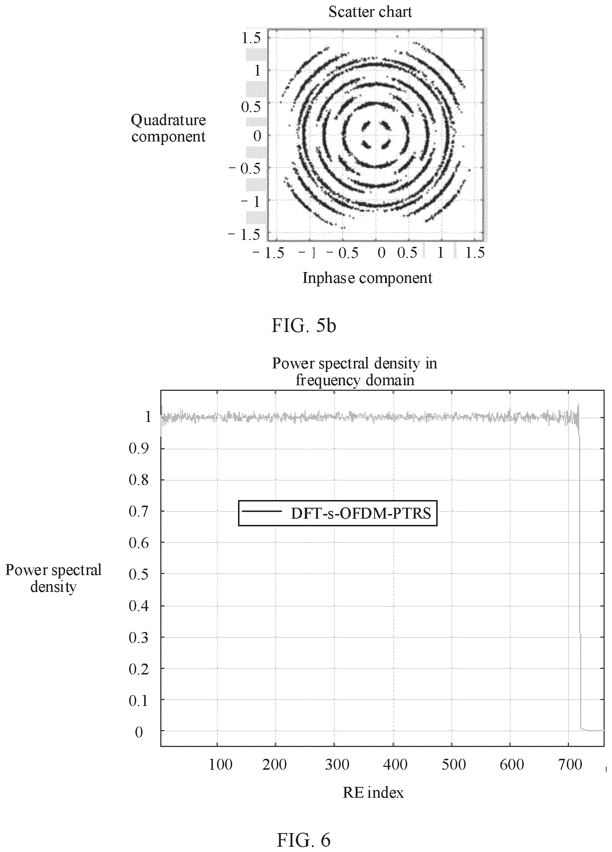

n=0, 1, ..., or N-1, and is a time domain sampling point. Simply speaking, the phase noise is a random phase value generated at each sampling point n. A basic principle of phase noise estimation by using the PTRS is as follows: A known PTRS (that is, known $x(n)$) is placed at a transmit end, and a phase noise value (that is, a value of $\theta$) may be calculated based on $x(n)$ and $y(n)$. The received signal is then compensated based on the noise value. FIG. 5a is a diagram of scatters obtained after phase noise compensation is performed on a received signal. FIG. 5b is a diagram of scatters obtained after phase noise compensation is not performed on a received signal. It can be learned that introducing a PTRS to track phase noise and compensating for an error caused by the phase noise can reduce impact of the phase noise.

(5) PTRS

The PTRS is mainly used for estimating and compensating for phase noise of a signal, to reduce impact of the phase noise on a data signal.

PTRSs in OFDM usually exist in both an uplink and a downlink, and a configuration parameter of the PTRS in the uplink is the same as a configuration parameter of the PTRS in the downlink. The configuration parameter mainly includes a frequency domain density and a time domain density.

The time domain density of the PTRS in the OFDM is related to a modulation and coding scheme (Modulation and Coding Scheme, MCS) of the data signal. Specific MCS thresholds are defined as ptrs-MCS1, ptrs-MCS2, ptrs-MCS3, and ptrs-MCS4. As shown in Table 1, it may be determined, based on a value of $I_{MCS}$ corresponding to the MCS configured for the data signal, that the time domain density $L_{PTRS}$ of the PTRS is a value in 4, 2, or 1.

When $I_{MCS}$ is less than ptrs-MCS1, there is no PTRS in time domain.

When $I_{MCS}$ is greater than or equal to ptrs-MCS1 and less than ptrs-MCS2, a PTRS density in time domain is 4.

When $I_{MCS}$ is greater than or equal to ptrs-MCS2 and less than ptrs-MCS3, a PTRS density in time domain is 2.

When $I_{MCS}$ is greater than or equal to ptrs-MCS3 and less than ptrs-MCS4, a PTRS density in time domain is 1.

**Table 1**

| Preset MCS | Time domain density ($L_{PTRS}$) |
|---|---|
| $I_{MCS}$<ptrs-MCS1 | No PTRS exists |
| ptrs-MCS1$\leq I_{MCS}$<ptrs-MCS2 | 4 |
| ptrs-MCS2$\leq I_{MCS}$<ptrs-MCS3 | 2 |
| ptrs-MCS3$\leq I_{MCS}$<ptrs-MCS4 | 1 |

A frequency domain density of a PTRS in DFT-s-OFDM is related to a scheduled bandwidth of the data signal, and a parameter representing the scheduled bandwidth is related to a quantity of resource blocks, as shown in Table 2.

When the quantity $N_{RB}$ of resource blocks is greater than or equal to $N_{RB1}$, a PTRS density in frequency domain is four RBs, that is, there is one PTRS resource element in every four RBs in the bandwidth.

When the quantity $N_{RB}$ of resource blocks is greater than or equal to $N_{RB0}$ and less than $N_{RB1}$, a PTRS density in frequency domain is 2, that is, there is one PTRS in every two RBs in the bandwidth.

When the quantity $N_{RB}$ of resource blocks is less than $N_{RB0}$, there is no PTRS in frequency domain, where $N_{RB0}$ and $N_{RB1}$ are parameters configured by a network device.

When the network device does not configure the time domain density and the frequency domain density, there is a PTRS on each scheduled time domain symbol, and a PTRS density in the bandwidth is 2.

**Table 2**

| Scheduled bandwidth | Frequency domain density ($K_{PTRS}$) |
|---|---|
| $N_{RB}$<$N_{RB0}$ | No PTRS exists |
| $N_{RB0}\leq N_{RB}$<$N_{RB1}$ | 2 |
| $N_{RB1}\leq N_{RB}$ | 4 |

A PTRS density in DFT-s-OFDM is only related to a bandwidth. Therefore, only the PTRS density in frequency domain and the frequency domain density are related to a scheduled bandwidth of data, and a parameter representing the scheduled bandwidth is related to a quantity of resource blocks, as shown in Table 3.

When the quantity $N_{RB}$ of resource blocks is greater than or equal to $N_{RB4}$, a quantity of PTRSs in frequency domain is 8, that is, a quantity of PTRS blocks in the bandwidth is 8, and a quantity of PTRSs in the block is 4.

When the quantity $N_{RB}$ of resource blocks is greater than or equal to $N_{RB3}$ and less than $N_{RB4}$, a quantity of PTRS blocks in frequency domain is 4, and a quantity of PTRSs in the PTRS block in the bandwidth is 4.

When the quantity $N_{RB}$ of resource blocks is greater than or equal to $N_{RB2}$ and less than $N_{RB3}$, a quantity of PTRS blocks in frequency domain is 4, and a quantity of PTRSs in the PTRS block in the bandwidth is 2.

When the quantity $N_{RB}$ of resource blocks is greater than or equal to $N_{RB1}$ and less than $N_{RB2}$, a quantity of PTRS blocks in frequency domain is 2, and a quantity of PTRSs in the PTRS block in the bandwidth is 4.

When the quantity $N_{RB}$ of resource blocks is greater than or equal to $N_{RB0}$ and less than $N_{RB1}$, a quantity of PTRS blocks in frequency domain is 2, and a quantity of PTRSs in the PTRS block in the bandwidth is 2.

$N_{RB0}$, $N_{RB1}$, $N_{RB2}$, $N_{RB3}$, and $N_{RB4}$ are parameters configured by the network device.

Table 3

| Scheduled bandwidth | Quantity of PTRS blocks | Quantity of PTRSs in the PTRS block |
|---|---|---|
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

A sequence of the PTRS in DFT-s-OFDM is a pseudo-random sequence modulated based on pi/2-binary phase shift keying (Binary Phase Shift Keying, BPSK). Specifically, PTRSs in DFT-s-OFDM at all time domain locations are different. Formula (2) corresponding to pi/2-BPSK is shown as follows:

$$r_m(m') = w(k') \frac{e^{j\frac{\pi}{2}(m \bmod 2)}}{\sqrt{2}} \left[ (1 - 2c(m')) + j(1 - 2c(m')) \right]$$
$$m' = N_{samp}^{group} s' + k'$$
$$s' = 0, 1, ..., N_{group}^{PT\text{-}RS} - 1$$
$$k' = 0, 1, N_{samp}^{group} - 1$$

Formula (2)

*m'* represents a time domain location of the PTRS, *k'* represents a frequency domain location of the PTRS, $r_m(m')$ represents a pseudo-random sequence of the PTRS modulated based on pi/2-BPSK, *c(m')* represents an initial sequence of the pseudo-random sequence, and the initial sequence is generally a random sequence whose values are 0 and 1. *s'* represents an index of a PTRS in one PTRS block, *w(k')* represents a precoding matrix of the PTRS, $N_{samp}^{group}$ represents a quantity of PTRSs in one symbol, and $N_{group}^{PT\text{-}RS}$ represents a quantity of PTRS blocks in one symbol.

However, a spectrum value in a DFT-s-OFDM scheduled bandwidth is stable, and consequently, a frequency band edge of the DFT-s-OFDM scheduled bandwidth has a large value. This causes large in-band radiation (In-band radiation), and consequently, in-band interference of the DFT-s-OFDM is high. The frequency band edge represents a start location or an end location of a signal.

For example, it is assumed that a first signal includes a plurality of time domain signals, and an initial frequency of the first signal is 0. Specifically, the first signal X(k) that has undergone DFT processing may be represented as Formula (3):

$$X(k) = \sum_{n=0}^{N-1} x(n) e^{-j\frac{2\pi nk}{N}}$$

Formula (3)

*x(n)* represents the time domain signal included in the first signal, and N represents a length of the first signal. It is assumed that the first signal includes four time domain signals, namely, x(0), x(1), x(2), and x(3). According to Formula (3), the signal X(0) of the first signal at a spectrum edge may be represented as:

$$X(0) = x(0) + x(1) + x(2) + x(3)$$

An amplitude value of the first signal at the spectrum edge is a sum of values of x(0), x(1), x(2), and x(3). Compared with an amplitude value of the first signal at another location, the amplitude value of the first signal at the spectrum edge is larger. Therefore, power is also higher, and subsequent signal output may be affected.

For example, FIG. 6 shows a power spectral density (Power Spectral Density, PSD) of a DFT-s-OFDM signal according to an embodiment of this application. A vertical axis represents a PSD, and a horizontal axis represents a resource element (Resource Element, RE) index. It can be learned that a PSD corresponding to the DFT-s-OFDM signal at an index value ranging from 100 to 700 is stable, and a PSD corresponding to the DFT-s-OFDM signal at an index value ranging from 0 to 100 and from 700 to 750 is large. Because there is a large power value at a frequency band edge of the DFT-s-OFDM signal, large in-band radiation may be generated. Consequently, in-band interference of a signal is high, and output of a subsequent signal is affected.

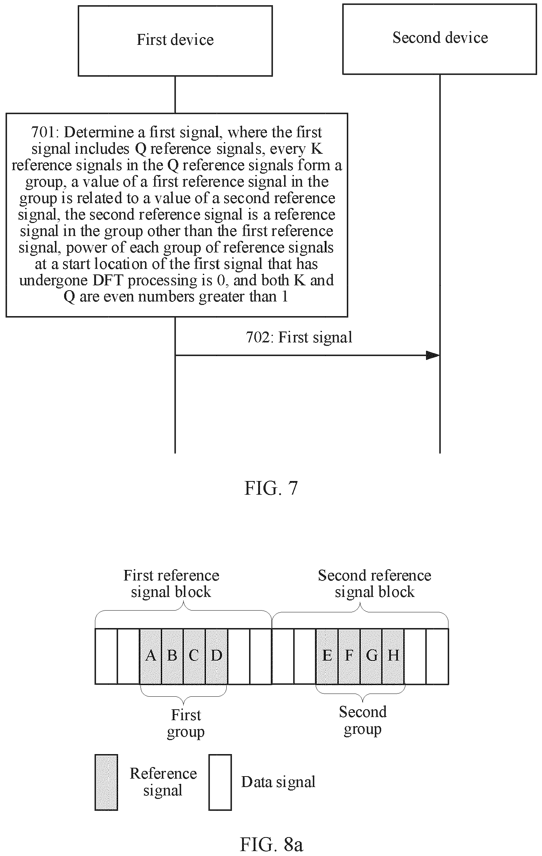

To reduce in-band interference of the signal, embodiments of this application provide a communication method and apparatus, and a device. Based on the network architecture, the terminal device, and the network device described in the foregoing content, the following describes a communication method provided in embodiments of this application. FIG. 7 is a flowchart of a communication method according to an embodiment of this application. The method may be implemented based on the network architecture shown in FIG. 1. In an implementation, a first device may be the network device in FIG. 1, and a second device may be the terminal device in FIG. 1. In another implementation, a first device may be the terminal device in FIG. 1, and a second device may be the network device in FIG. 1. The method includes the following steps.

701: The first device determines a first signal, where the first signal includes Q reference signals, every K reference signals in the Q reference signals form one group, a value of a first reference signal in the group is related to a value of a second reference signal, the second reference signal is a reference signal other than the first reference signal in the group, power of each group of reference signals at a start location of the first signal that has undergone DFT processing is 0, and both K and Q are even numbers greater than 1.

In this embodiment of this application, the first signal may be a DFT-s-OFDM signal, or an SC-QAM signal, a DFT-s-OFDM signal, an SC-OQAM signal, a DFT-s-OFDM with FTSS signal, a DFT-s-OFDM signal that carries a PAM constellation, a DFT-s-OFDM signal that carries a PAM constellation and that is processed by a spectrum shaping filter, a DFT-S-OFDM signal that is processed by a spectrum shaping filter and that carries a real part and an imaginary part separated from each other, a uw-DFT-s-OFDM signal, a uw-DFT-s-OFDM signal with a real part and an imaginary part separated from each other, a uw-DFT-s-OFDM with FTSS signal, a uw-DFT-s-OFDM signal that carries a PAM constellation, a uw-DFT-s-OFDM signal that is processed by a spectrum shaping filter and that carries a real part and an imaginary part separated from each other, a uw-DFT-s-OFDM signal that carries a PAM constellation and that is processed by a spectrum shaping filter, a zt-DFT-s-OFDM signal, a zt-DFT-s-OFDM with FTSS signal, a zt-DFT-s-OFDM signal with a real part and an imaginary part separated from each other, a zt-DFT-s-OFDM signal that carries a PAM constellation, a zt-DFT-s-OFDM signal that is processed by a spectrum shaping filter and that carries a real part and an imaginary part separated from each other, a zt-DFT-s-OFDM signal that carries a PAM constellation and that is processed by a spectrum shaping filter, or the like. It should be noted that the foregoing signals are named based on features of waveforms corresponding to the signals. In actual application, the foregoing signals may also be named in another manner.

In a possible implementation, the first device may generate the first signal. In another possible implementation, the first device may alternatively generate a portion of signal in the first signal, and receive a portion of signal in the first signal from another device. For example, the first device may receive a data signal sent by another device to the first device, and then the first device generates the first signal based on the data signal.

In this embodiment of this application, the first signal may include a plurality of data signals and a plurality of reference signals. The reference signal may be a PTRS. It should be noted that, with evolution of communication technologies, it is possible that the reference signal may further have some other functions. A name of the reference signal is not limited in this embodiment of this application.

The reference signal is provided by a first device (a transmit end) of a signal to a second device (a receive end) of the signal, and is used for estimating phase noise of the first signal. The first device and the second device may agree in advance on a preset reception value of the reference signal in the first signal, and location information, or location information and quantity information of the reference signal. After receiving the first signal, a second communication apparatus may determine the reference signal from the first signal based on location information (or further including quantity information) of the first reference signal. Then, the second communication apparatus may calculate the phase noise of the first signal based on an actual reception value and the preset reception value of the first reference signal. Next, the second communication apparatus may determine the data signal from the first signal, perform phase noise compensation on the data signal based on the calculated phase noise, and demodulate a compensated signal to obtain data information.

In this embodiment of this application, the first signal includes Q reference signals, where every K reference signals in the Q reference signals form one group, a value of a first reference signal in the group is related to a value of a second reference signal, and the second reference signal is a reference signal other than the first reference signal in the group. For example, the first device sets four reference signals as a group, where a group of reference signals include a reference signal 1, a reference signal 2, a reference signal 3, and a reference signal 4. If it is determined that the reference signal 1 is the first reference signal, the reference signal 2, the reference signal 3, and the reference signal 4 are second reference signals, and a value of the reference signal 1 is related to values of the reference signal 2, the reference signal 3, and the reference signal 4.

In a possible implementation, that a value of a first reference signal in the group is related to a value of a second reference signal is specifically: The value of the first reference signal in the group is related to a start frequency of the first signal and the value of the second reference signal. The start frequency of the first signal is used for representing the start location of the first signal. Optionally, the start frequency herein may also be represented as a start index value. There is a correspondence between an index value and a time domain location. One index value corresponds to one time domain location, and the start index value represents the start location of the first signal. It should be noted that the index value represents a time sequence relationship of sending signals, and a relationship in ascending order of index values of the signals represents a chronological order of sending the signals. In other words, the signals are sent in an order of the index values in sequence.

The start index value represents an index value of the start location of the first signal in time domain, and the start index value $K_0$ and the start frequency $f_0$ may be mutually converted, which may be specifically represented as Formula (4):

$$f_0 = -\frac{2\pi K_0}{N} \qquad\qquad \text{Formula (4)}$$

N represents a length or bandwidth of the first signal. For example, when the start index value is 0, the start frequency is 0; when the start index is the signal $-\dfrac{N}{2}$, a value of the start frequency is $\pi$. Subsequently, the start frequency is used for representing the start location of the first signal, and the start index value may be obtained through the foregoing Formula (4). Details are not described herein in this embodiment of this application.

The first signal that has undergone DFT processing may be represented as Formula (5):

$$S(k) = \sum_{n=K_0}^{K_0+N} s(n)e^{-j2\pi\frac{kn}{N}} \qquad\qquad \text{Formula (5)}$$

$S(k)$ represents the first signal, $s(n)$ represents signals included in the first signal, n represents an index value, and one index value corresponds to one time domain location. Specifically, the first signal includes a plurality of reference signals and a plurality of data signals, and $s(n)$ may be the reference signal or the data signal.

For example, it is assumed that the first signal includes eight time domain signals that are specifically s(0), s(1), s(2), s(3), s(4), s(5), s(6), and s(7).

When the start frequency is 0, a signal $S_0$ at the start location of the first signal that has undergone DFT processing may be represented as:

$$S_0 = s(0) + s(1) + s(2) + s(3) + s(4) + s(5) + s(6) + s(7).$$

When the start frequency is $\pi$, the signal $S_0$ at the start location of the first signal that has undergone DFT processing may be represented as:

$$S_0 = s(0) - s(1) + s(2) - s(3) + s(4) - s(5) + s(6) - s(7).$$

When the start frequency is $\dfrac{\pi}{2}$, the signal $S_0$ at the start location of the first signal that has undergone DFT processing may be represented as:

$$S_0 = s(0) + js(1) - s(2) - js(3) + s(4) + js(5) - s(6) - js(7).$$

When the start frequency is $\dfrac{3\pi}{2}$, the signal $S_0$ at the start location of the first signal that has undergone DFT processing may be represented as:

$$S_0 = s(0) - js(1) - s(2) + js(3) + s(4) - js(5) - s(6) + js(7).$$

The following describes a grouping manner of the reference signals based on the start frequency of the first signal and how to determine the value of the first reference signal. In this embodiment of this application, only cases in which the start frequency is 0, the start frequency is $\pi$, the start frequency is $\dfrac{\pi}{2}$, and the start frequency is $\dfrac{3\pi}{2}$ are described. Other cases, for example, the start frequency is $\dfrac{3\pi}{4}$, are similar. Details are not described in this embodiment of this application.

I. When the start frequency of the first signal is 0, a sum of the value of the first reference signal and the value of the second reference signal is 0.

Based on the foregoing example, the first signal includes eight time domain signals (s(0), s(1), s(2), s(3), s(4), s(5), s(6), and s(7)), and the signal $S_0$ at the start location of the first signal that has undergone DFT processing may be represented as:

$$S_0 = s(0) + s(1) + s(2) + s(3) + s(4) + s(5) + s(6) + s(7).$$

It can be learned that the signal $S_0$ at a spectrum edge of the first signal that has undergone DFT processing is a sum of values of all time domain signals. If the reference signals are grouped, to enable a sum of values of each group of reference signals that have undergone DFT processing to be 0, power or amplitudes of each group of reference signals at the start location of the first signal that has undergone DFT processing may also be 0.

The value of the first reference signal may be determined based on a fact that the sum of the value of the first reference signal and the value of the second reference signal is 0. For example, it is assumed that four reference signals form one group, a first reference signal is s(0), and second reference signals include s(1), s(2), and s(3). If a value of s(1) is 1, a value of s(2) is -1, and a value of s(3) is 1, because the sum of values of each group of reference signals is 0, that is $s(0) + s(1) + s(2) + s(3) = 0$, a value of the first reference signal s(0) is -1.

Based on this implementation, because the first signal includes the reference signal and the data signal, power or an amplitude of the reference signal at the start location of the first signal that has undergone DFT processing is 0. This helps reduce an amplitude value or a power value of the first signal at the start location, thereby reducing in-band interference of a signal.

II. When the start frequency of the first signal is $\pi$, based on the foregoing example, the first signal includes eight time domain signals (s(0), s(1), s(2), s(3), s(4), s(5), s(6), and s(7)), and the signal $S_0$ at the start location of the first signal that has undergone DFT processing may be represented as:

$$S_0 = s(0) - s(1) + s(2) - s(3) + s(4) - s(5) + s(6) - s(7).$$

It can be learned that the signal $S_0$ at the start location of the first signal that has undergone DFT processing is obtained through subtraction between values of two adjacent time domain signals.

Based on different groups, there are two manners for determining the value of the first signal:

1. Index values of reference signals in the group are all even numbers or odd numbers, and a sum of the value of the first reference signal and the value of the second reference signal is 0.

In the expression of $S_0$, when the index values of all reference signals in the group are all even numbers or odd numbers, coefficients of all reference signals in the group are the same. For example, it is assumed that two reference signals form one group, and the group of reference signals are s(1) and s(3) respectively. According to the foregoing expression of $S_0$, it may be determined that coefficients corresponding to s(1) and s(3) are both -1. Therefore, in this case, a sum of values of each group of reference signals is 0, so that amplitudes or power of each group of reference signals at the start location of the first signal that has undergone DFT processing may also be 0.

In this case, the value of the first reference signal may be determined based on the value of the second reference signal. For example, it is assumed that four reference signals form one group, a first reference signal is s(0), and second reference signals include s(2), s(4), and s(6). If a value of s(2) is 1, a value of s(4) is -1, and a value of s(6) is 1, because the sum of values of each group of reference signals is 0, that is $s(0) + s(2) + s(4) + s(6) = 0$, the value of the first reference signal s(0) is -1.

2. The start frequency of the first signal is $\pi$, and index values of reference signals in the group include both even numbers and odd numbers. The value of the first reference signal is a, a sum of values of second reference signals whose index values are even numbers is b, and a sum of values of second reference signals whose index values are odd numbers is c. If an index value of the first reference signal is an even number, a satisfies $(a + b) - c = 0$. If an index value of the first reference signal is an odd number, a satisfies $b - (c + a) = 0$.

In the expression of $S_0$, a coefficient corresponding to an even index value is 1, and a coefficient corresponding to an odd index value is -1. Therefore, in the group, a sum of values of reference signals whose index values are even numbers is A, and a sum of values of reference signals whose index values are odd numbers is B. If power of each group of reference signals at the start location of the first signal that has undergone discrete Fourier transform DFT processing needs to be 0, $A - B = 0$.

Based on the foregoing description, the value of the first reference signal may be determined based on the index value of the first reference signal, the value of the second reference signal, and an index value of the second reference signal. For example, it is assumed that four reference signals form one group, a first reference signal is s(0), and second reference signals include s(1), s(2), and s(3). If a value of s(1) is 1, a value of s(2) is -1, and a value of s(3) is 1, in this case, an index value of the first reference signal is an even number, index values of s(1) and s(3) in the second reference signals are odd numbers, and an index value of s(2) is an even number, based on the foregoing description, a satisfies $(a + b) - c = 0$, that is, s(0) satisfies $s(0) - s(1) + s(2) - s(3) = 0$, and a value of the first reference signal s(0) is 3.

Based on this implementation, because the first signal includes the reference signal and the data signal, power or an amplitude of the reference signal at the start location of the first signal that has undergone DFT processing is 0. This helps reduce an amplitude value or a power value of the first signal at the start location, thereby reducing in-band interference of a signal.

III. The start frequency of the first signal is $\dfrac{\pi}{2}$ or $\dfrac{3\pi}{2}$. Based on the foregoing example, the first signal includes eight time domain signals (s(0), s(1), s(2), s(3), s(4), s(5), s(6), and s(7)).

When the start frequency is $\dfrac{\pi}{2}$, the signal $S_0$ at the start location of the first signal that has undergone DFT processing may be represented as:

$$S_0 = s(0) + js(1) - s(2) - js(3) + s(4) + js(5) - s(6) - js(7).$$

When the start frequency is $\dfrac{3\pi}{2}$, the signal $S_0$ at the start location of the first signal that has undergone DFT processing may be represented as:

$$S_0 = s(0) - js(1) - s(2) + js(3) + s(4) - js(5) - s(6) + js(7).$$

It can be learned from the foregoing two expressions of $S_0$ that both expressions include four coefficients, namely, 1, -1, j, and -j. Therefore, based on different start frequencies and different grouping manners, the value of the first signal may be determined in the following three manners:

1. Index values i of all PTRSs in a group can satisfy one of the following conditions:

condition 1: $w = i \div 4$, where w is an integer;
condition 2: $x = (i - 1) \div 4$, where x is an integer;
condition 3: $y = (i - 2) \div 4$, where y is an integer; or
condition 4: $z = (i - 3) \div 4$, where z is an integer.

Here, i is an integer, and a sum of a value of a first PTRS and a value of a second PTRS is 0.

In the expression of $S_0$, when the index values of all reference signals in the group satisfy one of the foregoing conditions, it indicates that coefficients of all the reference signals in the group are the same. For example, it is assumed that two reference signals form one group, and the group of reference signals are s(1) and s(5) respectively. According to the foregoing expression of $S_0$ when the start frequency is $\dfrac{\pi}{2}$, it may be determined that coefficients corresponding to s(1) and s(5) are both j. According to the foregoing expression of S(0) when the start frequency is $\dfrac{3\pi}{2}$, it may be determined that coefficients corresponding to s(1) and s(5) are both -j. Therefore, in this case, a sum of values of each group of reference signals is 0, so that amplitudes of each group of reference signals at the start location of the first signal that has undergone DFT processing may also be 0.

In this case, the value of the first reference signal may be determined based on the value of the second reference signal. For example, it is assumed that two reference signals form one group, a first reference signal is s(3), and a second reference signal is s(7). If a value of s(7) is 1, based on the fact that a sum of values of each group of reference signals is 0, that is $s(3) + s(7) = 0$, a value of the first reference signal s(0) is -1.

2. The start frequency of the first signal is $\dfrac{\pi}{2}$, and index values i of PTRSs in a group satisfy a plurality of conditions in the following conditions:

condition 1: $w = i \div 4$, where w is an integer;
condition 2: $x = (i -1) \div 4$, where x is an integer;
condition 3: $y = (i - 2) \div 4$, where y is an integer; and
condition 4: $z = (i -3) \div 4$, where z is an integer.

A value of a first PTRS is a, a sum of values of second PTRSs whose index values satisfy the condition 1 is b, a sum of values of second PTRSs whose index values satisfy the condition 2 is c, a sum of values of second PTRSs whose index values satisfy the condition 3 is d, and a sum of values of second PTRSs whose index values satisfy the condition 4 is e.

If an index value of the first PTRS satisfies the condition 1, a satisfies $(a + b) + jc - d - je = 0$.

If an index value of the first PTRS satisfies the condition 2, a satisfies $b + j(c + a) - d - je = 0$.

If an index value of the first PTRS satisfies the condition 3, a satisfies $b + jc - (a + d) - je = 0$.

If an index value of the first PTRS satisfies the condition 4, a satisfies $b + jc - d - j(a + e) = 0$.

In the foregoing expression of $S_0$ when the start frequency is $\dfrac{\pi}{2}$, a coefficient corresponding to the index value satisfying the condition 1 is 1, a coefficient corresponding to the index value satisfying the condition 2 is j, a coefficient corresponding to an index value satisfying the condition 3 is -1, and a coefficient corresponding to the index value satisfying the condition 4 is -j. Therefore, in the group, a sum of values of reference signals whose index values satisfy the condition 1 is A, a sum of values of reference signals whose index values satisfy the condition 2 is B, a sum of values of reference signals whose index values satisfy the condition 3 is C, and a sum of values of reference signals whose index values satisfy the condition 4 is D. If power of each group of reference signals at the start location of the first signal that has undergone discrete Fourier transform DFT processing needs to be 0, $A + jB - C - jD = 0$.

Based on the foregoing description, the value of the first reference signal may be determined based on the index value of the first reference signal, the value of the second reference signal, and an index value of the second reference signal. For example, it is assumed that four reference signals form one group, a first reference signal is s(0), and second reference signals include s(1), s(2), and s(3). If a value of s(1) is 1, a value of s(2) is -1, and a value of s(3) is 1, an index value of the first reference signal s(0) satisfies the condition 1, an index value of s(1) in the second reference signals satisfies the condition 2, an index value of s(2) satisfies the condition 3, and an index value of s(3) satisfies the condition 4. In this case, based on the foregoing description that a satisfies $(a + b) + jc - d - je = 0$, that is, s(0) satisfies $s(0) + js(1) -s(2) -js(3) = 0$, the value of the first reference signal s(0) is 1.

3. The start frequency of the first signal is $\dfrac{3\pi}{2}$, and index values i of PTRSs in a group satisfy a plurality of conditions in the following conditions:

condition 1: $w = i \div 4$, where w is an integer;
condition 2: $x = (i -1) \div 4$, where x is an integer;
condition 3: $y = (i - 2) \div 4$, where y is an integer; and
condition 4: $z = (i -3) \div 4$, where z is an integer.

A value of a first PTRS is a, a sum of values of second PTRSs whose index values satisfy the condition 1 is b, a sum of values of second PTRSs whose index values satisfy the condition 2 is c, a sum of values of second PTRSs whose index values satisfy the condition 3 is d, and a sum of values of second PTRSs whose index values satisfy the condition 1 is e.

If an index value of the first PTRS satisfies the condition 1, a satisfies $(a + b) - jc - d + je = 0$.

If an index value of the first PTRS satisfies the condition 2, a satisfies $b - j(a + c) - d + je = 0$.

If an index value of the first PTRS satisfies the condition 3, a satisfies $b - jc - (a + d) + je = 0$.

If an index value of the first PTRS satisfies the condition 4, a satisfies $b - jc - d + j(a + e) = 0$.

In the foregoing expression of $S_0$ when the start frequency is $\dfrac{3\pi}{2}$, a coefficient corresponding to the index value satisfying the condition 1 is 1, a coefficient corresponding to the index value satisfying the condition 2 is -j, a coefficient corresponding to an index value satisfying the condition 3 is -1, and a coefficient corresponding to the index value satisfying the condition 4 is j. Therefore, in the group, a sum of values of reference signals whose index values satisfy the condition 1 is A, a sum of values of reference signals whose index values satisfy the condition 2 is B, a sum of values of reference signals whose index values satisfy the condition 3 is C, and a sum of values of reference signals whose index values satisfy the condition 4 is D. If power of each group of reference signals at the start location of the first signal that has undergone discrete Fourier transform DFT processing needs to be 0, $A - jB - C + jD = 0$.

Based on the foregoing description, the value of the first reference signal may be determined based on the index value of the first reference signal, the value of the second reference signal, and an index value of the second reference signal. For example, it is assumed that four reference signals form one group, a first reference signal is s(0), and second reference signals include s(1), s(2), and s(3). If a value of s(1) is 1, a value of s(2) is -1, and a value of s(3) is 1, an index value of the first reference signal s(0) satisfies the condition 1, an index value of s(1) in the second reference signals satisfies the condition 2, an index value of s(2) satisfies the condition 3, and an index value of s(3) satisfies the condition 4. In this case, based on the foregoing description that a satisfies $(a + b) - jc - d + je = 0$, that is, s(0) satisfies $s(0) - js(1) - s(2) + js(3) = 0$, the value of the first reference signal s(0) is 1.

In a possible implementation, values of the Q reference signals are obtained after precoding. A specific implementation may be as follows: The first device first assigns a preset value to each of the Q reference signals (for example, the preset values may be a same value, or may be assigned in another preset value assignment manner), and then the first device multiplies the Q reference signals by corresponding coefficients through precoding, so that power of each group of reference signals at the start location of the first signal that has undergone DFT processing is 0.

For example, the start frequency of the first signal is 0, and a group includes two reference signals, namely, a first reference signal and a second reference signal. First, the first device assigns 1 to both the first reference signal and the second reference signal. Because the power of each group of reference signals at the start location of the first signal that has undergone DFT processing needs to be 0, a sum of the value of the first reference signal that has undergone DFT processing and the value of the second reference signal that has undergone DFT processing needs to be 0. The first device determines, through precoding, that a coefficient corresponding to the first reference signal is 1 and a coefficient corresponding to the second reference signal is -1, and then multiplies the value of the first reference signal and the value of the second reference signal by the corresponding coefficients, so that the value of the first reference signal is 1 and the value of the second reference signal is -1. In this case, power of the first reference signal and the second reference signal at the start location of the first signal that has undergone DFT processing is 0.

In a possible implementation, a group of reference signals all belong to a same reference signal block. For example, as shown in FIG. 8a, a first reference signal block includes a reference signal A, a reference signal B, a reference signal C, and a reference signal D, and a second reference signal block includes a reference signal E, a reference signal F, a reference signal G, and a reference signal H. Four reference signals form one group, a first group of reference signals includes the reference signal A, the reference signal B, the reference signal C, and the reference signal D, and a second group of reference signals includes the reference signal E, the reference signal F, the reference signal G, and the reference signal H. It can be learned that all reference signals in the first group belong to the first reference signal block, and all reference signals in the second group belong to the second reference signal block.

In another possible implementation, K reference signals in a group of reference signals belong to a plurality of reference signal blocks. For example, as shown in FIG. 8a, a first reference signal block includes a reference signal A, a reference signal B, a reference signal C, and a reference signal D, and a second reference signal block includes a reference signal E, a reference signal F, a reference signal G, and a reference signal H. Four reference signals form one group, and the group of reference signals includes a reference signal C, a reference signal D, a reference signal E, and a reference signal F. In the group, the reference signal C and the reference signal D belong to the first reference signal block, and the reference signal E and the reference signal F belong to the second reference signal block. Therefore, reference signals in the group belong to a plurality of reference signal blocks.

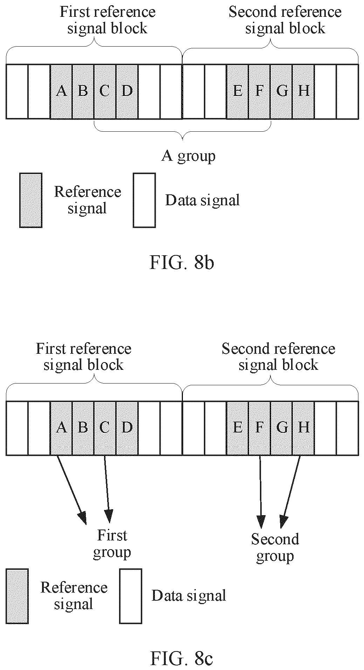

Based on the foregoing two possible implementations, optionally, K reference signals in a group of reference signals are consecutive or inconsecutive. That K reference signals are consecutive means that there is no reference signal that does not belong to the group and that is spaced between any two reference signals in the K reference signals. It should be further noted that a data signal may be spaced between two reference signals. For example, in FIG. 8b, a reference signal C, a reference signal D, a reference signal E, and a reference signal F are shown. Although there are four data signals spaced between the reference signal D and the reference signal E, there is no other reference signal that is not in the group. Therefore, the reference signals in the group are consecutive.

Specifically, there may be the following four cases:

1. A group of reference signals all belong to a same reference signal block, and K reference signals in the group of reference signals are consecutive. For example, as shown in FIG. 8a, the first group of reference signals includes the reference signal A, the reference signal B, the reference signal C, and the reference signal D. There is no reference signal that does not belong to the group and that is spaced between any two reference signals in the reference signal A, the reference signal B, the reference signal C, and the reference signal D, and the reference signal A, the reference signal B, the reference signal C, and the reference signal D belong to the first reference signal block. Therefore, the group of reference signals all belong to a same reference signal block, and reference signals in the group of reference signals are consecutive. The second group of reference signals is similar to the first group of reference signals, and details are not described herein again.

2. A group of reference signals belong to a same reference signal block, and K reference signals in the group of reference signals are inconsecutive. For example, as shown in FIG. 8c, a first group of reference signals includes a reference signal A and a reference signal C, a reference signal B is spaced between the reference signal A and the reference signal C, the reference signal B is not a reference signal in the first group, and both the reference signal A and the reference signal C belong to a first reference signal block. A second group of reference signals includes a reference signal F and a reference signal H, a reference signal G is spaced between the reference signal F and the reference signal H, the reference signal G is not a reference signal in the second group, and both the reference signal A and the reference signal C belong to the first reference signal block. Therefore, all reference signals in the first group belong to a same reference signal block, reference signals in the group of reference signals are inconsecutive, and the second group of reference signals is similar.

3. K reference signals in a group of reference signals belong to a plurality of reference signal blocks, and the K reference signals in the group of reference signals are consecutive. For example, as shown in FIG. 8b, the first group of reference signals includes the reference signal C, the reference signal D, the reference signal E, and the reference signal F. There is no reference signal that does not belong to the group and that is spaced between any two reference signals in the reference signal C, the reference signal D, the reference signal E, and the reference signal F. In the group, the reference signal C and the reference signal D belong to the first reference signal block, and the reference signal E and the reference signal F belong to the second reference signal block. Therefore, the group of reference signals belongs to a plurality of reference signal blocks, and reference signals in the group of reference signals are consecutive.

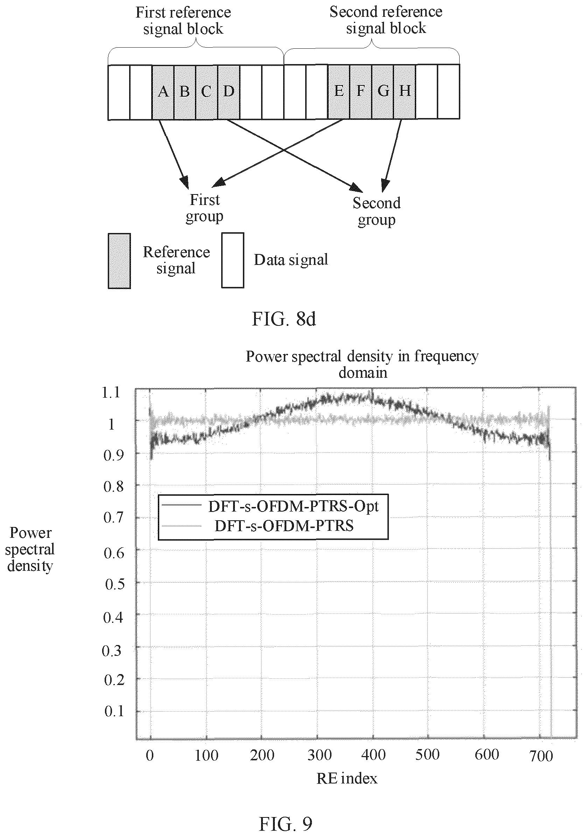

4. K reference signals in a group of reference signals belong to a plurality of reference signal blocks, and the K reference signals in the group of reference signals are inconsecutive. For example, as shown in FIG. 8d, a first group of reference signals includes a reference signal A and a reference signal E, another reference signal that is not in the first group, such as a reference signal B, is spaced between the reference signal A and the reference signal E, the reference signal A belongs to a first reference signal block, and the reference signal E belongs to a second reference signal block. A second group of reference signals includes a reference signal D and a reference signal H. Another reference signal that is not in the second group, such as a reference signal G, is spaced between the reference signal D and the reference signal H. The reference signal D belongs to the first reference signal block, and the reference signal H belongs to the second reference signal block. Therefore, the first group of reference signals belong to a plurality of reference signal blocks, and the K reference signals in the first group of reference signals are inconsecutive. The second group of reference signals is similar.

702: The first device sends the first signal to the second device.

In a possible implementation, before step 702, values of each group of reference signals may be scrambled by using a pseudo random signal sequence. Scrambling a signal helps reduce interference caused by the signal to an adjacent device.

It should be noted that the signal sent by the first device to the second device is a signal obtained after a series of processing is performed on the first signal, for example, a signal that undergoes processing such as discrete Fourier transform (DFT), subcarrier demapping (subcarrier demapping), inverse fast Fourier transform (IFFT), and cyclic prefix (add CP) addition. After the processing, the first signal is sent to the second device through a radio channel in a form of an electromagnetic wave.

Based on the method described in this embodiment of this application, because the first signal includes the reference signal and the data signal, the power or the amplitude of the reference signal at the start location of the first signal that has undergone DFT processing is 0. This helps reduce an amplitude value or a power value of the first signal at the start location, thereby reducing in-band interference of a signal.

For example, as shown in FIG. 9, a vertical axis represents a PSD, a horizontal axis represents an RE index value, a curve corresponding to a DFT-s-OFDM-PTRS is a power spectral density of a DFT-s-OFDM signal obtained by using an existing method, and a curve corresponding to a DFT-s-OFDM-PTRS-Opt is a power spectral density of a DFT-s-OFDM signal obtained by using the method provided in embodiments of this application. It can be learned that PSDs corresponding to the DFT-s-OFDM signal obtained based on the method in embodiments of this application at index values 700 to 750 are less than PSDs of the DFT-s-OFDM signal obtained by using the existing method. It can be learned that, based on the method provided in embodiments of this application, power of a signal at a spectrum edge is reduced, so that in-band interference of the signal can be reduced.

To implement functions in the methods provided in embodiments of this application, a first device and a second device may include a hardware structure and a software module, and implement the foregoing functions in the form of a hardware structure, a software module, or a combination of the hardware structure and the software module. One of the foregoing various functions may be performed in the form of the hardware structure, the software module, or the combination of the hardware structure and the software module.

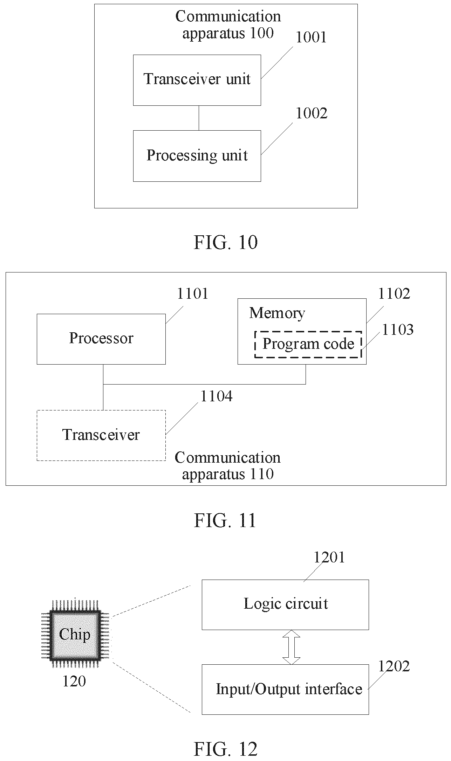

FIG. 10 is a diagram of a structure of a communication apparatus according to an embodiment of this application. The communication apparatus 100 includes a communication unit 1001 and a processing unit 1002. The following describes the two units in detail.

In an embodiment:

The processing unit 1002 is configured to determine a first signal, where the first signal includes Q reference signals, every K reference signals in the Q reference signals form one group, a value of a first reference signal in the group is related to a value of a second reference signal, the second reference signal is a reference signal other than the first reference signal in the group, power of each group of reference signals at a start location of the first signal that has undergone DFT processing is 0, and both K and Q are even numbers greater than 1. The communication unit 1001 is configured to send the first signal.

In a possible implementation, that a value of a first reference signal in the group is related to a value of a second reference signal is specifically: The value of the first reference signal in the group is related to a start frequency of the first signal and the value of the second reference signal.

In a possible implementation, the start frequency of the first signal is 0, and a sum of the value of the first reference signal and the value of the second reference signal is 0.

In a possible implementation, the start frequency of the first signal is $\pi$, index values of reference signals in the group are all even numbers or odd numbers, and a sum of the value of the first reference signal and the value of the second reference signal is 0.

In a possible implementation, the start frequency of the first signal is $\pi$, and index values of reference signals in the group include both even numbers and odd numbers. The value of the first reference signal is a, a sum of values of second reference signals whose index values are even numbers is b, and a sum of values of second reference signals whose index values are odd numbers is c. If an index value of the first reference signal is an even number, a satisfies $(a + b) - c = 0$. If an index value of the first reference signal is an odd number, a satisfies $b - (c + a) = 0$.

In a possible implementation, the group of reference signals all belong to a same reference signal block.

In a possible implementation, K reference signals in the group of reference signals belong to a plurality of reference signal blocks.

In a possible implementation, K reference signals in the group of reference signals are consecutive or inconsecutive.

In a possible implementation, values of the Q reference signals are obtained after precoding.

It should be noted that in the foregoing embodiment, the communication apparatus 100 may be a network device, may be an apparatus in a network device, or may be an apparatus that can be used in matching with a network device. Alternatively, the communication apparatus 100 may be a terminal device, may be an apparatus in a terminal device, or may be an apparatus that can be used in matching with a terminal device.

Specifically, for operations performed by the units of the communication apparatus 100 shown in FIG. 10, refer to related content of the first device in the method embodiment of FIG. 7. Details are not described herein again. The foregoing units may be implemented through hardware, software, or a combination of software and hardware. In an embodiment, functions of the communication unit 1001 and the processing unit 1002 in the foregoing content may be implemented by one or more processors in the communication apparatus 100.

FIG. 11 is a diagram of a structure of another communication apparatus according to an embodiment of this application. The communication apparatus 110 may be configured to implement the method described in the foregoing method embodiments. For details, refer to the descriptions in the foregoing method embodiments.

The communication apparatus 110 may include one or more processors 1101. The processor 1101 may be a general-purpose processor, a dedicated processor, or the like. The processor 1101 may be configured to: control a communication apparatus (for example, a network device, a network device chip, a terminal device, or a terminal device chip), execute a software program, and process data of the software program.

Optionally, the communication apparatus 110 may include one or more memories 1102, and program code 1103 may be stored in the memories 1102. The program code may be run on the processor 1101, so that the communication apparatus 110 performs the method described in the foregoing method embodiments. Optionally, the memory 1102 may further store data. The processor 1101 and the memory 1102 may be disposed separately, or may be integrated together. Optionally, the memory 1102 may be further located outside the communication apparatus 110, and is coupled to the communication apparatus 110 in some manners.

Optionally, the communication apparatus 110 may further include a transceiver 1104. The transceiver 1104 may be referred to as a communication unit, a transceiver machine, a transceiver circuit, or the like, and is configured to implement a transceiver function. The transceiver 1104 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function.

In an embodiment:

The processor 1101 is configured to determine a first signal, where the first signal includes Q reference signals, every K reference signals in the Q reference signals form one group, a value of a first reference signal in the group is related to a value of a second reference signal, the second reference signal is a reference signal other than the first reference signal in the group, power of each group of reference signals at a start location of the first signal that has undergone DFT processing is 0, and both K and Q are even numbers greater than 1. The transceiver 1104 is configured to send the first signal.

In a possible implementation, that a value of a first reference signal in the group is related to a value of a second reference signal is specifically: The value of the first reference signal in the group is related to a start frequency of the first signal and the value of the second reference signal.

In a possible implementation, the start frequency of the first signal is 0, and a sum of the value of the first reference signal and the value of the second reference signal is 0.

In a possible implementation, the start frequency of the first signal is $\pi$, index values of reference signals in the group are all even numbers or odd numbers, and a sum of the value of the first reference signal and the value of the second reference signal is 0.

In a possible implementation, the start frequency of the first signal is $\pi$, and index values of reference signals in the group include both even numbers and odd numbers. The value of the first reference signal is a, a sum of values of second reference signals whose index values are even numbers is b, and a sum of values of second reference signals whose index values are odd numbers is c. If an index value of the first reference signal is an even number, a satisfies $(a + b) - c = 0$. If an index value of the first reference signal is an odd number, a satisfies $b - (c + a) = 0$.

In a possible implementation, the group of reference signals all belong to a same reference signal block.

In a possible implementation, K reference signals in the group of reference signals belong to a plurality of reference signal blocks.

In a possible implementation, K reference signals in the group of reference signals are consecutive or inconsecutive.

In a possible implementation, values of the Q reference signals are obtained after precoding.

In another possible design, the communication apparatus 110 may include a circuit. The circuit may implement the transmitting, receiving, or communication function in the foregoing method embodiments.

The processor and the transceiver that are described in this application may be implemented on an integrated circuit (integrated circuit, IC), an analog IC, a radio frequency integrated circuit RFIC, a mixed-signal IC, an application specific integrated circuit (application specific integrated circuit, ASIC), a printed circuit board (printed circuit board, PCB), an electronic device, or the like.

The communication apparatus in the foregoing embodiments may be a network device or a terminal device. However, a scope of the communication apparatus described in this application is not limited thereto, and a structure of the communication apparatus may not be limited in FIG. 11. The communication apparatus may be an independent device or may be a part of a large device. For example, the communication apparatus may be:

(1) an independent integrated circuit IC, a chip, a chip system, or a subsystem;
(2) a set of one or more ICs, where optionally, the IC set may alternatively include a storage component configured to store data and instructions;
(3) an ASIC, such as a modem (Modem);
(4) a module that can be embedded in another device;
(5) a receiver, an intelligent terminal, a wireless device, a handset, a mobile unit, a vehicle-mounted device, a cloud device, an artificial intelligence device, or the like; or
(6) another.

For a case in which the communication apparatus may be a chip or a chip system, refer to a diagram of a structure of a chip shown in FIG. 12. The chip 120 shown in FIG. 12 includes a logic circuit 1201 and an input/output interface 1202.

There may be one or more logic circuits 1201, and there may be a plurality of input/output interfaces 1202.

For a case in which the chip is configured to implement a function of a first communication apparatus in embodiments of this application:

The logic circuit 1201 determines a first signal, where the first signal includes Q reference signals, every K reference signals in the Q reference signals form one group, a value of a first reference signal in the group is related to a value of a second reference signal, the second reference signal is a reference signal other than the first reference signal in the group, power of each group of reference signals at a start location of the first signal that has undergone DFT processing is 0, and both K and Q are even numbers greater than 1.

The input/output interface 1202 outputs the first signal.

The logic circuit is further configured to process the first signal. For an operation performed by the logic circuit 1201, refer to the description about the first device in the embodiment of FIG. 7.

A person skilled in the art may further understand that various illustrative logical blocks (illustrative logical blocks) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the functions for each particular application, but it should not be considered that the implementation goes beyond the protection scope of embodiments of this application.

This application further provides a computer-readable storage medium. The computer-readable storage medium stores a computer program. When the computer-readable storage medium is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or some of embodiments may be implemented in the form of a computer program product. The computer program product includes one or more computer instructions. When the computer program instructions are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

A person of ordinary skill in the art may understand that various numerical numbers such as the first and the second in this application are merely distinguished for ease of description, and are not intended to limit the scope and sequence of embodiments of this application.

The correspondences shown in the tables in this application may be configured, or may be predefined. Values of information in the tables are merely examples, and may be configured to other values. This is not limited in this application. When a correspondence between the information and parameters is configured, not all the correspondences shown in the tables need to be configured. For example, in the tables in this application, correspondences shown in some rows may alternatively not be configured. For another example, proper deformations and adjustments such as splitting and combination may be made based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used. "Predefine" in this application may be understood as "define", "predefine", "store", "pre-store", "pre-negotiate", "pre-configure", "solidify", or "pre-bum".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**Claims**

1. A communication method, comprising:

   determining a first signal, wherein the first signal comprises Q reference signals, every K reference signals in the Q reference signals form one group, a value of a first reference signal in the group is related to a value of a second reference signal, the second reference signal is a reference signal other than the first reference signal in the group, power of each group of reference signals at a start location of the first signal that has undergone discrete Fourier transform DFT processing is 0, and both K and Q are even numbers greater than 1; and
   sending the first signal.

2. The method according to claim 1, wherein a value of a first reference signal in the group being related to a value of a second reference signal comprises:
   the value of the first reference signal in the group is related to a start frequency of the first signal and the value of the second reference signal.

3. The method according to claim 2, wherein
   the start frequency of the first signal is 0, and a sum of the value of the first reference signal and the value of the second reference signal is 0.

4. The method according to claim 2, wherein
   the start frequency of the first signal is $\pi$, index values of reference signals in the group are all even numbers or odd numbers, and a sum of the value of the first reference signal and the value of the second reference signal is 0.

5. The method according to claim 2, wherein

   the start frequency of the first signal is $\pi$, and index values of reference signals in the group comprise both even numbers and odd numbers, wherein
   the value of the first reference signal is a, a sum of values of second reference signals whose index values are even numbers is b, and a sum of values of second reference signals whose index values are odd numbers is c; and
   if an index value of the first reference signal is an even number, a satisfies $(a + b) - c = 0$; or
   if an index value of the first reference signal is an odd number, a satisfies $b - (c + a) = 0$.

6. The method according to any one of claims 1 to 5, wherein the group of reference signals all belong to a same reference signal block.

7. The method according to any one of claims 1 to 5, wherein K reference signals in the group of reference signals belong to a plurality of reference signal blocks.

8. The method according to any one of claims 1 to 7, wherein K reference signals in the group of reference signals are consecutive or inconsecutive.

9. The method according to any one of claims 1 to 8, wherein values of the Q reference signals are obtained after precoding.

10. A communication apparatus, wherein the communication apparatus comprises a unit for performing the method according to any one of claims 1 to 9.

11. A communication apparatus, comprising a processor, wherein the processor is coupled to a memory;

    the memory is configured to store program code; and
    the processor is configured to invoke the program code in the memory to perform the method according to any one of claims 1 to 9.

12. A communication apparatus, wherein the communication apparatus comprises a logic circuit and an input/output interface;

    the input/output interface is configured to output a first signal; and
    the logic circuit is configured to: process the first signal, and perform the method according to any one of claims 1 to 9.

13. A computer-readable storage medium, wherein the computer-readable storage medium is configured to store instructions; and when the instructions are executed, the method according to any one of claims 1 to 9 is implemented.

14. A computer program product, wherein the computer program product comprises a computer program or instructions; and when the computer program or the instructions are run on a computer, the computer is enabled to perform the method according to any one of claims 1 to 9.

Network device          Terminal device

FIG. 1

Signal sending process:

Data bit → Modulate →

DFT →

Reference signal →

Filtering processing → Mapping → IFFT → Radio frequency → Send

Signal receiving process:

Data bit ← Demodulate ←

IDFT ←

Phase noise estimation ← Reference signal ←

Filtering processing ← Demapping ← FFT ← Radio frequency ← Receive

FIG. 2

Serial-to-parallel conversion → N-point DFT → Subcarrier mapping → M-point IDFT → Parallel-to-serial conversion → Cyclic prefix addition → Digital-to-analog conversion → Channel

Parallel-to-serial conversion ← N-point IDFT ← Subcarrier demapping ← M-point DFT ← Serial-to-parallel conversion ← Cyclic prefix removal ← Analog-to-digital conversion ← Channel

N<M

DFT: discrete Fourier transform
IDFT: inverse discrete Fourier transform

FIG. 3

Degree of phase noise

PHN of AAU1

PHN of AAU2

PHN of AAU: phase noise of an active antenna

FIG. 4

Scatter chart

Quadrature component

Inphase component

FIG. 5a

Scatter chart

Quadrature component

Inphase component

FIG. 5b

Power spectral density in frequency domain

Power spectral density

DFT-s-OFDM-PTRS

RE index

FIG. 6

```
┌─────────────────────────┐          ┌─────────────────────────┐
│      First device       │          │      Second device      │
└─────────────────────────┘          └─────────────────────────┘
```

701: Determine a first signal, where the first signal includes Q reference signals, every K reference signals in the Q reference signals form a group, a value of a first reference signal in the group is related to a value of a second reference signal, the second reference signal is a reference signal in the group other than the first reference signal, power of each group of reference signals at a start location of the first signal that has undergone DFT processing is 0, and both K and Q are even numbers greater than 1

702: First signal

FIG. 7

First reference
signal block

Second reference
signal block

| A | B | C | D |    | E | F | G | H |

First
group

Second
group

Reference
signal

Data signal

FIG. 8a

First reference
signal block

Second reference
signal block

A | B | C | D

E | F | G | H

A group

Reference
signal

Data signal

FIG. 8b

First reference
signal block

Second reference
signal block

A | B | C | D

E | F | G | H

First
group

Second
group

Reference
signal

Data signal

FIG. 8c

First reference
signal block

Second reference
signal block

| | | A | B | C | D | | | | | E | F | G | H | | |

First
group

Second
group

Reference
signal

Data signal

FIG. 8d

Power spectral density in frequency
domain

Power
spectral
density

DFT-s-OFDM-PTRS-Opt
DFT-s-OFDM-PTRS

RE index

FIG. 9

Communication
apparatus 100          1001

Transceiver unit

1002

Processing unit

FIG. 10

1101                        1102

Memory                  1103

Processor            Program code

1104

Transceiver

Communication
apparatus 110

FIG. 11

1201

Logic circuit

Chip

120

1202

Input/Output interface

FIG. 12

## INTERNATIONAL SEARCH REPORT

International application No.

**PCT/CN2023/089607**

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

IPC:H04L H04W H04Q

Documentation searched other than minimum documentation to the extent that such documents are included in the fields searched

Electronic data base consulted during the international search (name of data base and, where practicable, search terms used)

CNTXT, ENTXTC, ETSI, 3GPP, CJFD: 参考信号, PTRS, 组, group, 离散傅里叶变换, DFT, 起始, initial, 功率, power, PAPR, 零, 0, 高频, 6G, 相位噪声, phase noise, PHN, PN, DFT-s-OFDM, 带内辐射, in band emission, 带内干扰, in band interference

### C. DOCUMENTS CONSIDERED TO BE RELEVANT

| Category* | Citation of document, with indication, where appropriate, of the relevant passages | Relevant to claim No. |
|---|---|---|
| A | US 2022029870 A1 (LU PENG et al.) 27 January 2022 (2022-01-27)<br>claims 1-20, and description, paragraphs 58-78 | 1-14 |
| A | WO 2022028309 A1 (HUAWEI TECHNOLOGIES CO., LTD.) 10 February 2022 (2022-02-10)<br>entire document | 1-14 |
| A | CN 113196685 A (QUALCOMM INC.) 30 July 2021 (2021-07-30)<br>entire document | 1-14 |
| A | CN 113691476 A (HUAWEI TECHNOLOGIES CO., LTD.) 23 November 2021 (2021-11-23)<br>entire document | 1-14 |
| A | ERICSSON. "Evaluation results for NR in 52.6 to 71 GHz"<br>*3GPP TSG-RAN WG1 Meeting #103-e R1-2007984,* 13 November 2020 (2020-11-13),<br>entire document | 1-14 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 May 2023** | **16 May 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/089607**

| Patent document cited in search report | | | Publication date (day/month/year) | Patent family member(s) | | | Publication date (day/month/year) |
|---|---|---|---|---|---|---|---|
| US | 2022029870 | A1 | 27 January 2022 | None | | | |
| WO | 2022028309 | A1 | 10 February 2022 | CA | 3187908 | A1 | 10 February 2022 |
| | | | | CN | 114070449 | A | 18 February 2022 |
| CN | 113196685 | A | 30 July 2021 | WO | 2020135244 | A1 | 02 July 2020 |
| | | | | WO | 2020132788 | A1 | 02 July 2020 |
| | | | | EP | 3903427 | A1 | 03 November 2021 |
| | | | | US | 2022029675 | A1 | 27 January 2022 |
| CN | 113691476 | A | 23 November 2021 | WO | 2021233155 | A1 | 25 November 2021 |
| | | | | IN | 202247065865 | A | 25 November 2022 |
| | | | | EP | 4145783 | A1 | 08 March 2023 |

Form PCT/ISA/210 (patent family annex) (July 2022)

32

**EP 4 510 514 A1**

**Patent documents cited in the description**

- CN 202210445583